# DEMANDE DE BREVET EUROPEEN

(11) **EP 2 336 088 A1**
(43) Date de publication de la demande: **22.06.2011**
(21) Numéro de dépôt: 10290639.3
(22) Date de dépôt: 03.12.2010
(51) Int. Cl.: C01G 45/00, C01G 45/12, C01B 13/02

(54) **Procédé pour la production de l'oxygène a partir d'un oxyde mixte à structure lamellaire.**

(30) Priorité: 11.12.2009 FR 0906013
(71) Demandeur: IFP Energies nouvelles, 92852 Rueil-Malmaison Cedex (FR)
(72) Inventeur: Lambert, Arnold, 42410 Chavanay (FR)

(57) **Abrégé**

La présente invention concerne un procédé de séparation à haute température de l'oxygène au moyen d'un matériau comprenant au moins un composé répondant à la formule AₓBO_{2-δ}yH₂O avec une structure lamellaire composée de feuillets générés par l'enchainement d'octaèdres liées entre eux par les arêtes, où A est au moins un des éléments IA ou IIA de la classification périodique des éléments, B est au moins un des éléments IIIB à IIB de la classification périodique des éléments, 0<x≤2, 0≤y≤2 et -0,4≤δ≤0,4.

## Description

La présente invention se rapporte à des matériaux pour la séparation à haute température de l'oxygène et en particulier à des matériaux comprenant des oxydes du manganèse à structure lamellaire.

Elle concerne plus particulièrement des matériaux pouvant libérer une partie de leur oxygène de réseau sous la forme de gaz O₂, notamment lorsque la pression partielle en oxygène à laquelle ils sont soumis diminue, et se régénèrent lorsque la pression partielle en oxygène est rétablie.

Dans un contexte de demande énergétique mondiale croissante, le captage du dioxyde de carbone en vue de sa séquestration est devenu une nécessité incontournable afin de limiter l'émission de gaz à effet de serre préjudiciables à l'environnement.

L'oxycombustion est l'un des procédés prometteurs pour la production d'énergie intégrant le captage du CO₂.

Un tel procédé nécessite l'utilisation d'une unité de production d'oxygène capable d'approvisionner la chambre d'oxycombustion en oxygène pur ou dilué dans un flux de CO₂ et/ou de vapeur d'eau, comme cela est mieux décrit dans le brevet WO 07/039687A, par exemple.

Un autre procédé de production d'énergie intégrant le captage du CO₂ est la séparation précombustion du CO₂ à l'aide d'installations de type IGCC (Integrated Gasification Combined Cycle).

Comme décrit dans le brevet US 6,824,575 cette technologie nécessite, comme pour l'oxycombustion, l'utilisation d'une unité de production d'oxygène capable d'approvisionner une unité de gazéification avec de l'oxygène pur ou dilué dans un flux de vapeur d'eau et/ou de CO₂.

La production de gaz de synthèse (CO+H₂) à partir de matières premières carbonées diverses, telles que le charbon, le pétrole, le gaz naturel, la biomasse est une étape clef dans la production d'hydrogène ou de carburants de synthèse qui nécessite un oxygène aussi exempt d'azote que possible pour éviter de diluer le gaz de synthèse obtenu.

Dans tous ces cas, il est important d'éviter, ou au moins de minimiser, la présence d'azote. Par contre, il peut être avantageux d'utiliser un mélange d'oxygène et d'un gaz inerte, qui peut être de la vapeur d'eau et/ou du dioxyde de carbone, faciles à séparer de l'oxygène ou pouvant, selon les applications, être utilisé comme tel.

La technologie la plus utilisée actuellement pour la production de quantités d'oxygène suffisantes pour ce type de procédés est la séparation de l'air par distillation cryogénique.

Un flux d'oxygène de haute pureté peut être obtenu à l'aide de cette technologie, mais son coût énergétique est élevé puisqu'il est nécessaire de refroidir l'air à très basse température pour ensuite permettre sa distillation.

L'oxygène froid obtenu doit ensuite être réchauffé avant introduction dans la chambre d'oxycombustion ou dans l'unité de gazéification.

De plus, le coût de production de l'oxygène obtenu augmente de façon importante avec la pureté désirée, et la consommation énergétique importante entraîne une émission supplémentaire de CO₂.

Il serait donc avantageux de disposer d'une méthode de production d'oxygène à haute température (400-900°C) afin de limiter le coût de captage du CO₂.

Le brevet US 6,059,858 décrit un procédé de production d'oxygène à haute température par sorption sélective de l'oxygène de l'air

Ceci s'appuie sur le procédé CAR (Ceramic Autothermal Recovery) selon lequel un matériau céramique réagit sélectivement avec l'oxygène de l'air et cet oxygène est ensuite désorbé par le matériau sous l'action d'une baisse de la pression partielle d'oxygène, créée en tirant sous vide ou en purgeant le matériau avec un gaz inerte (vapeur d'eau, CO₂ ou mélange) à température constante, plus connu sous le vocable anglais de "Pressure Swing Adsorption (PSA) process".

Les étapes de sorption-désorption sont répétées cycliquement, et l'utilisation de plusieurs réacteurs à lit fixe en parallèle permet de générer un flux suffisant de CO₂/vapeur enrichi en oxygène.

Une variante de l'étape de régénération de la céramique consiste à augmenter la température à pression partielle d'oxygène constante (Temperature Swing process).

Le brevet FR 2,895,272 décrit également un procédé continu de production d'oxygène à haute température basé sur les propriétés de sorption/désorption de céramiques du type pérovskite ou fluorite utilisées dans un réacteur cylindrique tournant.

L'efficacité de ces procédés dépend avant tout des propriétés du matériau céramique utilisé : sélectivité pour l'oxygène, capacité de transfert d'oxygène, cinétiques de sorption/désorption et stabilité physico-chimique.

Ces procédés nécessitent l'utilisation de matériaux qui réagissent avec l'oxygène de manière réversible en fonction des conditions de température et de pression.

Plusieurs matériaux répondant à ces critères sont décrits dans les demandes de brevet US2005/0176588, US 2005/0176589 et US2005/0226798, parmi lesquels les pérovskites, les brownmillerites, les matériaux supraconducteurs du type YBaCuO et les oxydes mixtes de type cérine dopée.

Tous ces matériaux sont, dans une certaine gamme de température, connus pour leurs propriétés de conduction mixte ionique et électronique (MIEC : Mixed lonic Electronic Conductors) et présentent, en plus de ces propriétés de conduction, une capacité de sorption de l'oxygène relativement importante.

Les défauts des différentes structures (lacunes en oxygène, sites d'oxygène interstitiels) permettent aux matériaux de réagir avec l'oxygène à haute température (ils se 'chargent' en oxygène) et de désorber tout ou partie de cet oxygène en fonction des conditions de température et de pression.

Le brevet US2005/0176588 divulgue également l'ajout d'oxydes métalliques simples (MOₙ, n=0.5, 1, 1.5, 2, et M=Cu, Co, Ni, Bi, Pb, V, Mn, Cr) aux matériaux de type MIEC décrits ci-dessus, afin d'augmenter la capacité de transfert d'oxygène du matériau composite obtenu.

|Pour remédier aux inconvénients ci-dessus|, l'invention propose des matériaux permettant de produire une quantité importante d'oxygène à des températures élevées, avantageusement comprises entre 400 et 900°C.

La présente invention concerne donc des matériaux AₓB0_{2-δ}-_{Y}H₂O, avec 0<x<2, 0<y<2 et -0,4<b<0,4, pour l'adsorption et la désorption d'oxygène à haute température (400°C<T<900°C) dont la structure lamellaire est composée de feuillets générés par l'enchaînement d'octaèdres liés entre eux par les arêtes.

A est au moins un des éléments IA ou IIA de la classification périodique des éléments et B est au moins un des éléments IIIB à IIB de la classification périodique des éléments.

Avantageusement, l'élément du groupe IIIB de la classification des éléments est le Mn.

Par cela, les matériaux sont plus particulièrement du type oxyde de manganèse lamellaire AₓMn0_{2-δ}yH₂O, avec 0<x<2, 0≤y≤2 et -0,4≤δ≤0,4, préférentiellement avec 0,2<x≤1, où A est un ion alcalin ou alcalino terreux (éléments IA ou IIA de la classification périodique des éléments) ou un mélange d'ions alcalins et/ou alcalino terreux, et permettent de produire une quantité importante d'oxygène à des températures comprises entre 400 et 900°C.

Les oxydes de manganèse lamellaires sont aussi appelés "birnessites" en référence à la variété naturelle découverte à Birness en Écosse.

Les composés de type birnessite présentent une structure bidimensionnelle composée de feuillets générés par l'enchaînement d'octaèdres MnO₆ liés entre eux par les arêtes ; on les retrouve également sous le nom de "Octahedral Layers". Ces composés présentent généralement un écart à la stoechiométrie dû à la présence de cations Mn hétérovalents (Mn²⁺, Mn³⁺, Mn⁴⁺) et/ou de lacunes foliaires, compensé par la présence dans l'espace interfoliaire de cations hydratés, généralement alcalins ou alcalino-terreux.

Il est également possible de substituer partiellement les ions Mn par des ions de métaux de transition choisis parmi les éléments des groupes IIIB à IIB de la classification des éléments (selon la notation CAS). Cet écart à la stoechiométrie dû à la présence de cations Mn hétérovalents (Mn²⁺, Mn³⁺, Mn⁴⁺) et/ou de lacunes foliaires et/ou à la substitution partielle d'ions Mn par des ions de métaux de transition choisis parmi les éléments des groupes IIIB à IIB de la classification des éléments (selon la notation CAS) est compensé par la présence dans l'espace interfoliaire de cations hydratés, où A est un élément ou un mélange d'éléments alcalins ou alcalinoterreux (groupes IA et IIA de la classification périodique des éléments).

|ll est aussi possible, dans le cas de matériaux où une partie des ions Mn est substituée par un élément ou un mélange d'éléments choisis parmi les métaux de transition (groupes IIIB à IIB de la classification des éléments), que tout ou partie desdits cations soit également présents dans les espaces interfoliaires.

La valeur de δ varie en fonction du degré d'oxydation moyen du manganèse (compris entre 3 et 4), de la variation de charge engendrée par la substitution éventuelle du Mn par un ou plusieurs métaux de transition de degré d'oxydation différent de 4, et des charges positives apportées par les cations interfoliaires A. Lorsque le matériau est soumis à une diminution de pression partielle en oxygène à haute température (400°C≤T≤900°C), l'émission d'oxygène par le matériau entraîne une augmentation de δ et la réduction d'ions manganèse afin de maintenir l'électroneutralité du matériau.

L'estimation de la valeur de δ est donc incertaine et est liée à la définition d'un état de référence où le matériau serait considéré comme complètement oxydé. Dans la littérature se rapportant aux oxydes de manganèse lamellaire et à leur préparation, la formulation AₓMnO_{2 y}H₂O (A=Na, K, Mg...) est généralement utilisée indistinctement, dans la mesure où la propriété de sorption/désorption de l'oxygène revendiquée par l'invention n'a jamais été identifiée comme un phénomène réversible dans lequel la structure lamellaire n'est pas altérée. Le caractère non stoechiométrique en oxygène des birnessites est néanmoins rapporté par certains auteurs qui proposent des formulations du type AₓMnO_{y} zH₂O où y≠2.

La préparation de birnessites synthétiques est très bien décrite dans de nombreuses publications, une large variété de matériaux à structure birnessite ayant été préparée par différentes méthodes de synthèse dans l'objectif d'en exploiter différentes propriétés, telles que leur capacité d'échange ionique, leurs propriétés catalytiques, ou encore leur utilisation comme matériaux de cathode dans les batteries au lithium (J. Luo, S.L. Suib, J. Phys. Chem. B 1997, 101, 10403). Les différents protocoles de synthèse utilisés aboutissent à des oxydes de manganèse lamellaires différents, mais tous appelés birnessite du fait de l'agencement lamellaire du manganèse et de la périodicité de 7Å environ selon la direction perpendiculaire au plan des feuillets.

Néanmoins, les matériaux obtenus présentent des diffractogrammes des rayons X sur poudre, signature de leur structure cristallographique, très différents en fonction du mode de synthèse, et correspondent donc chacun à des polytypes différents d'un même minéral : la birnessite.

La birnessite peut ainsi être obtenue par oxydation de sels du manganèse II (MnCl₂, MnSO₄, Mn(NO₃)₂, Mn(CH₃COO)₂) par l'oxygène ou le peroxyde d'hydrogène à basse température (25°C) en milieu basique (R. Giovaneli, E. Stahli, W. Feitknecht, Helv. Chim. Acta 1970, 53, 209). L'oxydation des sels de Mn" peut également être effectuée par le permanganate de potassium (J. Luo, S.L. Suib, J. Phys. Chem. B 1997, 101, 10403).

La décomposition thermique sous air sec de KMnO₄ à haute température (800°C) permet également d'obtenir une structure de type birnessite (A.C. Gaillot, V.A. Drits, A. Manceau, B. Lanson, Microporous Mesoporous Materials 2007, 98, 267), ainsi que la réduction de KMnO₄ par un sucre ou un acide organique (S. Ching, D.J. Petrovay, M.L. Jorgensen, S.L. Suib, Inorg. Chem. 1997, 36, 883).

Les matériaux selon l'invention présentent généralement une surface spécifique comprise entre 1 et 200 m².g⁻¹, de préférence entre 2 et 100 m².g⁻¹ et de manière très préférée entre 20 et 80 m².g⁻¹.

Lorsqu'ils sont soumis, à une température constante supérieure ou égale à 400°C ou à une baisse de la pression partielle en oxygène, les matériaux selon l'invention relâchent une certaine proportion de l'oxygène du réseau sous forme de gaz O₂. et une partie des cations Mn sont simultanément réduits afin d'assurer l'électroneutralité du matériau. La structure du matériau partiellement réduit reste néanmoins de type birnessite.

Lorsque le matériau partiellement réduit est soumis à une pression partielle en oxygène plus importante, il se réoxyde.

A pression partielle en oxygène constante, les matériaux selon l'invention relâchent une certaine proportion de l'oxygène de réseau lorsque la température à laquelle ils sont soumis augmente. Une partie des cations Mn sont simultanément réduits afin d'assurer l'électroneutralité du matériau.

Lorsque la température diminue, à la même pression partielle en oxygène, le matériau se réoxyde progressivement.

Les matériaux selon l'invention peuvent être mis en forme à l'aide des techniques connues de l'homme de l'art pour obtenir des poudres, des billes, des pastilles ou bien des extrudés.

Ils peuvent être également déposés ou directement préparés sous forme de membranes sur des supports monolithiques en céramique ou en métal.

Afin d'augmenter la quantité de matériau susceptible de capter et relarguer l'oxygène, le support monolithique lui-même peut être constitué(e) d'une phase de type birnessite selon l'invention, enduit ou non d'un autre matériau selon l'invention.

La mise en oeuvre sous la forme de membrane peut se révéler particulièrement intéressante pour exploiter les propriétés du matériau selon l'invention.

En effet, les matériaux selon l'invention intègrent de l'oxygène à leur réseau cristallin lorsqu'ils sont soumis à une pression partielle d'oxygène et cèdent de l'oxygène au milieu lorsque celle-ci diminue. Or la mise en oeuvre sous forme de membrane permet de soumettre de façon continue les matériaux selon l'invention à des pressions partielles différentes sur chacune de leurs faces. Il en résulte un gradient de pression partielle qui constitue une force motrice pour la séparation de l'oxygène. La réalisation de membrane dont la perméance serait assurée par les matériaux selon l'invention permet ainsi de disposer d'un moyen de production d'oxygène en continu.

La mise en forme des matériaux est réalisée par les techniques connues de l'homme de l'art :
- les poudres peuvent être obtenues, par exemple, par atomisation ou par séchage en lit fluidisé,
- les billes peuvent être obtenues par la technique dite de granulation, ou encore par la technique dite "oil-drop",
- les pastilles peuvent être obtenues par pastillage,
- les extrudés par la technique d'extrusion,
- le dépôt sur support monolithique céramique ou métallique peut être réalisé par la technique d'enduction de suspension,
- l'obtention de monolithes constitués par les matériaux selon l'invention peut être réalisée par extrusion.

Les supports monolithiques qui peuvent être mis en oeuvre sont:
- soit constitués de matériau selon l'invention,
- soit en céramique, dont les éléments principaux peuvent être l'alumine, la zircone, la cordiérite, la mullite, la silice, les alumino-silicates ou la combinaison de plusieurs de ces composés,
- soit en carbure et/ou nitrure de silicium,
- soit en titanate d'aluminium,
- soit en métal généralement obtenu à partir d'alliage de fer, chrome et aluminium dopés éventuellement par du nickel, du cobalt, du cérium ou de l'yttrium.

Les supports céramiques peuvent avoir une structure de type nid d'abeille ou se présenter sous forme de mousse ou de fibres.

Les supports métalliques peuvent être réalisés par l'enroulement de feuillards ondulés ou par l'empilement de feuilles métalliques également ondulées, constituant une structure en nid d'abeille à canaux droits ou à canaux en zigzag communiquant entre eux ou non. Ils peuvent être également réalisés à partir de fibres ou de fils métalliques enchevêtrés, tissés, tressés ou tricotés.

Pour les supports en métal renfermant de l'aluminium dans leur composition, ils peuvent subir un prétraitement à haute température (par exemple entre 700°C et 1100°C) pour développer en surface une micro-couche d'alumine réfractaire. Cette micro-couche superficielle, de porosité et de surface spécifique supérieure à celle du métal d'origine favorise l'accrochage de la phase active tout en protégeant le reste du support contre la corrosion.

La quantité de phase adsorbante déposée ou préparée directement sur le support (substrat) céramique ou métallique est généralement comprise entre 20 et 300g par litre dudit support et avantageusement entre 50 et 200g par litre.

Il peut être avantageux de prévoir le mélange d'au moins deux matériaux selon l'invention de façon à étendre la gamme de température sur laquelle les matériaux peuvent être utilisés selon le procédé de production d'oxygène à haute température.

### Exemples

### Exemple 1 - comparatif

La pérovskite La_{0,2}Sr_{0,8}Co_{0,6}Fe_{0,4}O_{3±δ} (LSCF2864) a été préparée par précipitation des nitrates de La, Sr, Co et Fe par l'oxalate de sodium. Après filtration et lavage du précipité obtenu, ce dernier a été calciné à 1000°C pour former une pérovskite dont le diffractogramme des rayons X correspond à celui d'une pérovskite de type SrCoO₃ (fiche JCPDS n° 04-002-4432), et la composition élémentaire correspond à la formulation du LSCF2864, l'un des matériaux les plus performants (en présence de vapeur d'eau et/ou de CO₂) comme décrit dans les brevets US2005/0176588, US 2005/0176589 et US2005/0226798. La surface spécifique du matériau mesurée par adsorption d'azote selon la méthode BET est de 8 m²/g.

### Exemple 2

La birnessite selon cet exemple a été préparée par ajout d'une solution contenant 19,6g d'acétate de manganèse et 3,4g d'acétate de magnésium dans une solution concentrée d'hydroxyde de sodium (5,5 mol/l) agitée mécaniquement. Une solution contenant 4,8g de permanganate de potassium est ensuite ajoutée sous agitation à la suspension précédemment obtenue, puis la suspension est mûrie dans une étuve à 40°C pendant 7 jours. Après filtration et lavage à l'eau distillée, le solide est séché à 80°C pendant 24 heures.

La formulation de la birnessite selon l'exemple 2, calculée à partir des résultats de l'analyse ICP de l'échantillon en considérant que la formulation est du type AₓMnO_{2y}H₂O, est Na₀,₆₂Mg₀,₁₄K₀,₀₂MnO₂ 1,9H₂O.

Le diffractogramme des rayons X du solide confirme qu'il s'agit d'un matériau de structure birnessite, avec une distance inter lamellaire de l'ordre de 7,1 Å

Le matériau selon l'exemple 2 a également été calciné à 500°C pendant 2 heures. L'analyse DRX confirme que le matériau calciné a toujours une structure de type birnessite, avec une distance inter lamellaire de l'ordre de 5,6 Å. Cette distance inter lamellaire est plus faible que celle du matériau séché car le degré d'hydratation des cations interfoliaires est plus faible suite à la calcination.

La surface spécifique du solide mesurée par la méthode BET est de 47m²/g_{.}

### Exemple 3 (CEC213)

La birnessite selon cet exemple 3 a été préparée par ajout d'une solution contenant 23,5g d'acétate de manganèse dans une solution concentrée d'hydroxyde de sodium (5,5 mol/1) agitée mécaniquement. Une solution contenant 4,8g de permanganate de potassium est ensuite ajoutée sous agitation à la suspension précédemment obtenue, puis la suspension est mûrie dans une étuve à 40°C pendant 7 jours. Après filtration et lavage à l'eau distillée, le solide est séché à 80°C pendant 24 heures.

La formulation de la birnessite selon l'exemple 3, calculée à partir des résultats de l'analyse ICP de l'échantillon en considérant que la formulation est du type AₓMnO_{2y}H₂O, est Na₀,₃₈K₀,₀₁MnO₂ H₂O.

Le diffractogramme des rayons X du solide confirme qu'il s'agit d'un matériau de structure birnessite, avec une distance inter lamellaire de l'ordre de 7.1 Å.

Le matériau selon l'exemple 2 a également été calciné à 500°C pendant 2 heures. L'analyse DRX confirme que le matériau calciné a toujours une structure de type birnessite, avec une distance inter lamellaire de l'ordre de 5,6 Å. Cette distance inter lamellaire est plus faible que celle du matériau séché car le degré d'hydratation des cations interfoliaires est plus faible suite à la calcination.

La surface spécifique du solide mesurée par la méthode BET est de 58m²/g_{.}

### Exemple 4

La birnessite selon l'exemple 4 a été préparée par ajout d'une solution contenant 19,6g d'acétate de manganèse et 2,3g de nitrate de calcium dans une solution concentrée d'hydroxyde de sodium (5,5 mol/1) agitée mécaniquement. Une solution contenant 4,8g de permanganate de potassium est ensuite ajoutée sous agitation à la suspension précédemment obtenue, puis la suspension est mûrie dans une étuve à 40°C pendant 7 jours. Après filtration et lavage à l'eau distillée, le solide est séché à 80°C pendant 24 heures.

La formulation de la birnessite selon l'exemple 4, calculée à partir des résultats de l'analyse ICP de l'échantillon en considérant que la formulation est du type AₓMnO₂ yH₂O, est Na₀,₂₇Ca₀,K₀,₀₁MnO₂ H₂O.

Le diffractogramme des rayons X du solide confirme qu'il s'agit d'un matériau de structure birnessite, avec une distance inter lamellaire de l'ordre de 7 Å.

La surface spécifique du solide mesurée par la méthode BET est de 29m²/g_{.}

### Exemple 5 (VGN16b)

La birnessite selon l'exemple 5 a été préparée par ajout d'une solution contenant 19,6g d'acétate de manganèse et 2,6g de nitrate de cuivre dans une solution concentrée d'hydroxyde de sodium (5,5 mol/1) agitée mécaniquement. Une solution contenant 4,8g de permanganate de potassium est ensuite ajoutée sous agitation à la suspension précédemment obtenue, puis la suspension est mûrie dans une étuve à 40°C pendant 7 jours. Après filtration et lavage à l'eau distillée, le solide est séché à 80°C pendant 24 heures.

La formulation de la birnessite selon l'exemple 5, calculée à partir des résultats de l'analyse ICP de l'échantillon en considérant que la formulation est du type AₓMnO₂ yH₂O, est Na_{0,28}Cu_{0,1}K_{0,04}MnO₂ 1,9H₂O.

Le diffractogramme des rayons X du solide confirme qu'il s'agit d'un matériau de structure birnessite, avec une distance inter lamellaire de l'ordre de 7 Å.

La surface spécifique du solide mesurée par la méthode BET est de 33m²/g_{.}

### Exemple 6

La birnessite selon l'exemple 6 a été préparée par calcination de permanganate de potassium à 800°C. Le permanganate est tout d'abord broyé finement, puis étalé en couche mince sur un plateau. La poudre est ensuite calcinée à 800°C pendant 5 heures.

La formulation de la birnessite selon l'exemple 6, calculée à partir des résultats de l'analyse ICP de l'échantillon en considérant que la formulation est du type AₓMnO₂ yH₂O, est KMnO₂H₂O.

Le diffractogramme des rayons X du solide confirme qu'il s'agit majoritairement d'un matériau de structure birnessite, avec une distance inter lamellaire de l'ordre de 6,9Å.

La surface spécifique du solide mesurée par la méthode BET est de 3m²/g_{.}

### Exemple 7

La birnessite selon l'exemple 7 a été préparée par ajout d'une solution contenant 30g de permanganate de sodium dans une solution concentrée (250g/1) de glucose agitée mécaniquement. Un gel marron est formé au cours d'une réaction exothermique. Après refroidissement, le gel est séché à 110°C pendant 24 heures, puis calciné pendant 2 heures à 400°C. Le composé obtenu est ensuite lavé et séché à 110°C.

La formulation de la birnessite selon l'exemple 7, calculée à partir des résultats de l'analyse ICP de l'échantillon en considérant que la formulation est du type AₓMnO₂-yH₂O, est Na_{0,29}K_{0,03}MnO_{2.} 0_{,}9H₂O.

Le diffractogramme des rayons X du solide confirme qu'il s'agit majoritairement d'un matériau de structure birnessite, avec une distance inter lamellaire de l'ordre de 7Å.

La surface spécifique du solide mesurée par la méthode BET est de 39m²/g.

### Mesure de la capacité de transfert d'oxygène en conditions PSA des oxydes préparés aux exemples 1 à 7

Une thermobalance SETARAM TAG24 a été équipée d'un automate d'alimentation en gaz permettant de simuler les étapes de sorption/désorption de l'oxygène successives vues par les particules dans un procédé de type CAR.

Les tests sont réalisés à différentes températures (500, 600, 700 et 800°C), avec 20mg (± 2mg) d'échantillon contenu dans une nacelle en Pt.

Afin de permettre une comparaison entre les différents échantillons, la distribution en taille des particules est sélectionnée entre 30 et 40µm par tamisage.

Le gaz de désorption de l'oxygène utilisé est l'azote pur, et le gaz de régénération est l'air sec.

La montée en température est effectuée sous air, à un débit de 150ml/min. Lorsque le système a atteint la température de consigne, après stabilisation pendant 5 minutes sous air, quelques cycles air/azote/air sont réalisés. La capacité de transfert d'oxygène des matériaux est mesurée à quatre paliers de température, 500, 600, 700 et 800°C.

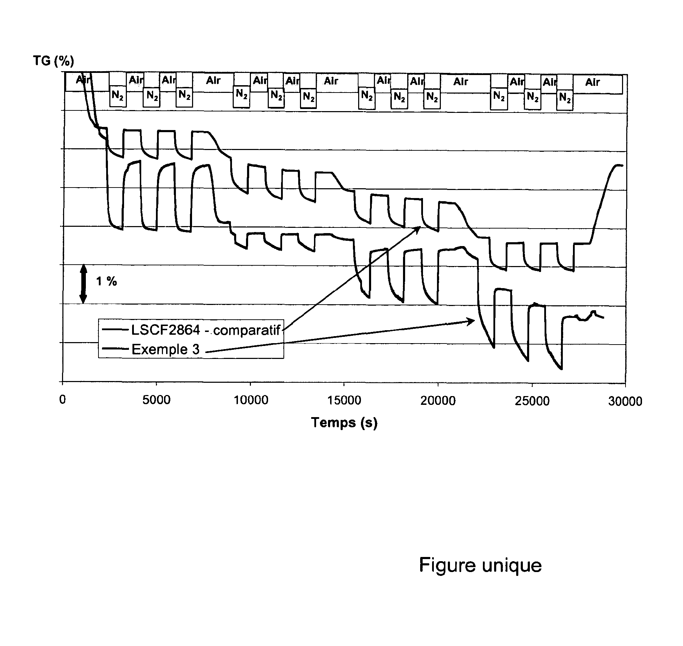

La figure 1 compare les variations de masse mesurées aux différentes températures avec les matériaux de l'exemple 1 (comparatif) et de l'exemple 3.

Avec le matériau selon l'exemple 1 (comparatif), la capacité de transfert d'oxygène mesurée aux différents paliers de température varie de 0,6 à 0,9% massique, la capacité maximale étant obtenue à 700°C. Avec le matériau selon l'exemple 3, la capacité de transfert d'oxygène maximale est plus importante (1,5% massique) et elle est obtenue à 500°C, ce qui représente un avantage important pour la mise en ceuvre de la technologie de production d'oxygène selon le procédé PSA, du fait d'une pénalité énergétique associée moins importante et de la possibilité d'utiliser des matériaux moins chers pour réaliser les installations. A 600°C, une baisse importante de la capacité de transfert d'oxygène est observée avec le matériau selon l'exemple 3 (0,2% massique) puis la capacité augmente avec la température (0,8% et 1,2% massique à 700°C et 800°C respectivement).

Les résultats des essais réalisés à différentes températures avec des gaz secs sont regroupés dans le Tableau 1 ci-après qui montre la capacité de transfert d'oxygène des différents matériaux préparés en fonction de la température de test. La capacité de transfert d'oxygène est calculée à chaque température par différence entre la masse régénérée (après passage sous air) et la masse du matériau partiellement réduit (après passage sous azote), divisée par la masse de l'échantillon à 500°C.

Le matériau selon l'exemple 2 présente une capacité de transfert d'oxygène à 500 et 600°C significativement plus élevée que celle de l'exemple comparatif.

Pour le matériau selon l'exemple 3, la capacité de transfert d'oxygène est plus importante à 500 et 800°C.

Les matériaux selon les exemples 4 et 5 ont une capacité de transfert d'oxygène du même ordre de grandeur que le matériau de l'exemple comparatif.

La capacité de transfert d'oxygène très importante (comparativement à l'exemple 1) des matériaux selon les exemples 2, 3, 6 et 7 à 500°C constitue un avantage majeur des matériaux selon l'invention. En effet, la pénalité énergétique liée à l'utilisation des matériaux est moins importante à 500°C qu'à plus haute température. De plus, la réalisation d'un procédé de production d'oxygène à 500°C nécessite un investissement moins important qu'à 800°C ou plus, car les spécifications des matériaux de construction utilisables sont moins sévères.

Dans le cas où le procédé nécessiterait un matériau dont la capacité de transfert d'oxygène soit élevée sur une gamme de températures comprise entre 500°C et 800°C, l'association des matériaux selon les exemples 2 à 7 pourrait être envisagée.

**Tableau 1**

| T °C | Capacité de transfert d'oxygène (% massique) | | | | | | |
|---|---|---|---|---|---|---|---|
| | Exemple 1 (comparatif) | Exemple 2 | Exemple 3 | Exemple 4 | Exemple 5 | Exemple 6 | Exemple 7 |
| 500 | 0,6 | 1.3 | 1,5 | 0,4 | 0,4 | 1,3 | 1,0 |
| 600 | 0,75 | 0.9 | 0,2 | 0,7 | 0,7 | 0,3 | 0,5 |
| 700 | 0,9 | 0.2 | 0,8 | 0,8 | 0,8 | 0,7 | 1,2 |
| 800 | 0,8 | 0.2 | 1,2 | 0,9 | 0,8 | 0,7 | 1,5 |

La présente invention n'est pas limitée aux exemples décrits ci-dessus mais englobe toute variantes et équivalents.

## Revendications

1. Procédé de production d'oxygène à haute température avec un matériau pour la séparation de l'oxygène comprenant au moins un composé répondant à la formule AₓBO_{2-δ} yH₂O avec une structure lamellaire composée de feuillets générés par l'enchaînement d'octaèdres liées entre eux par les arêtes, où A est au moins un des éléments IA ou IIA de la classification périodique des éléments, B est au moins un des éléments IIIB à IIB de la classification périodique des éléments, 0<x≤2, 0≤y≤2 et -0,4≤δ≤0,4., dans lequel :
- on diminue la pression partielle d'oxygène sur le matériau ou on augmente la température à laquelle le matériau est soumis pour qu'il libère une partie de son oxygène de réseau sous forme de gaz O₂ ;
- puis on soumet ledit matériau à une pression partielle d'oxygène plus élevée ou on diminue cette température pour qu'il se réoxyde.

2. Procédé selon la revendication 1, **caractérisé en ce que** la formule du composé AₓBO_{2-δ}yH₂O est telle que 0,2<x≤1.

3. Procédé selon la revendication 1, **caractérisé en ce que** B est l'élément Mn.

4. Procédé selon l'une des revendications 1 à 3, **caractérisé en ce que** le matériau de séparation présente une surface spécifique comprise entre 1 et 200 m².g⁻¹, de préférence entre 2 et 100 m².g⁻¹, et de manière très préférée entre 20 et 80 m².g⁻¹.

5. Procédé selon l'une des revendications 1 à 4, **caractérisé en ce qu'**on utilise le matériau de séparation sous la forme d'une poudre, de billes, de pastilles.

6. Procédé selon l'une des revendications 1 à 4, **caractérisé en ce qu'**on utilise le matériau de séparation sous la forme d'un extrudé.

7. Procédé selon l'une des revendications 1 à 4, dans lequel on utilise le matériau de séparation sous forme de membrane afin de produire l'oxygène en continu.

8. Procédé selon l'une des revendications précédentes dans lequel la température est comprise entre 400°C et 900°C.
